# EUROPEAN PATENT APPLICATION

(11) **EP 2 693 233 A2**
(43) Date of publication of application: **05.02.2014**
(21) Application number: 13178801.0
(22) Date of filing: 31.07.2013
(51) Int. Cl.: G01V 1/00, G01V 13/00

(54) **Method and device for determining signature of seismic source**

(30) Priority: 02.08.2012 US 201261678811 P
(71) Applicant: CGG Services SA, 91300 Massy (FR)
(72) Inventor: Tonchia, Hélène, 91300 MASSY (FR)
(74) Representative: Regimbeau

(57) **Abstract**

A sensor probe system (460) for measuring a signature of a marine seismic source array (410), the system (460) including a base-mounted part (462) attached to a base (402, 970a); a sensor probe (464) configured to sink toward ocean bottom when released in water, wherein the sensor probe (464) includes a signature sensor (552) for measuring the signature of the source array (410); and a cable (466) connecting the sensor probe (464) to the base-mounted part (462) so that the sensor probe (464) is retrievable. A portion (466a) of the cable (466) is wound in the base-mounted part (462) and a remaining part (466b) of the cable (466) is wound on a tail (540) of the sensor probe (464) prior to launch.

## Description

### CROSS REFERENCE TO RELATED APPLICATIONS

This application claims priority and benefit from U.S. Provisional Patent Application No. 61/678,811, filed August 2, 2012, for "Far Field Launchable and Recoverable System," the entire content of which is incorporated in its entirety herein by reference.

### BACKGROUND

### TECHNICAL FIELD

Embodiments of the subject matter disclosed herein generally relate to methods and systems related to seismic exploration and, more particularly, to mechanisms and techniques for determining a signature of a seismic source.

### DISCUSSION OF THE BACKGROUND

Reflection seismology is a method of geophysical exploration to determine the properties of a portion of a subsurface layer in the earth, which is information especially helpful in the oil and gas industry. Marine reflection seismology is based on the use of a controlled source that sends energy waves into the earth. By measuring the time it takes for the reflections to come back to plural receivers, it is possible to estimate the depth and/or composition of the features causing such reflections. These features may be associated with subterranean hydrocarbon deposits.

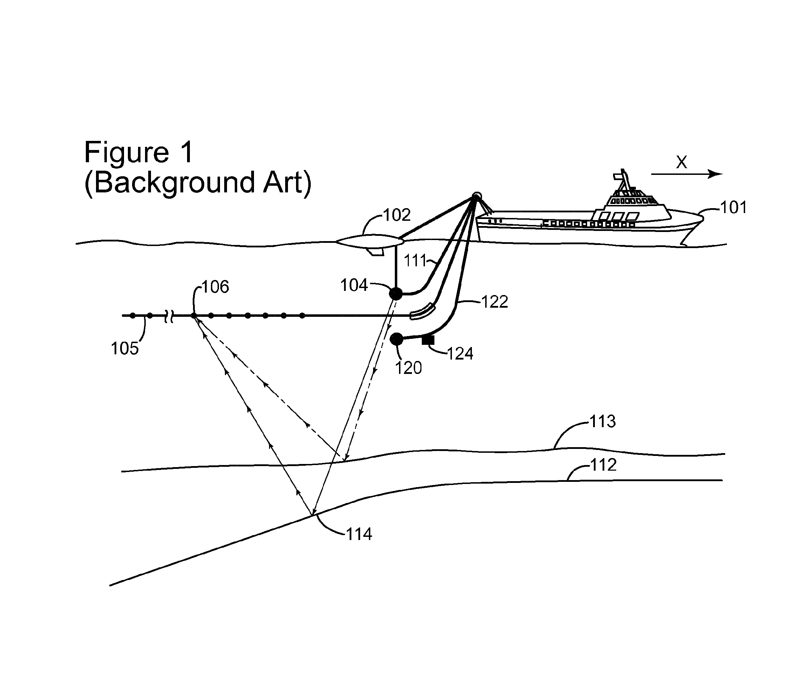

For marine applications, commonly used seismic sources are essentially impulsive (e.g., air guns that hold compressed air which is suddenly allowed to expand). An air gun produces a high amount of acoustic energy over a short time. Such a source is towed by a vessel at a certain depth along direction X. The acoustic waves from the air gun propagate in all directions. The air gun instantaneously releases large peak acoustic pressures and energy. Such a source is illustrated in Figure 1. This figure shows a source array 104 being towed behind a vessel 101. When the source array is activated, acoustic energy is coupled into the water and transmitted into the earth, where part of the energy is reflected back from the ocean bottom 113 and from rock formation interfaces 112 (rock layer that has a change in acoustic impedance). Sensors or receivers 106 used to record the reflected energy include hydrophones, geophones and/or accelerometers. The receivers can be encapsulated in either fluid-filled or solid streamers 105 that are also towed at shallow depth by vessels.

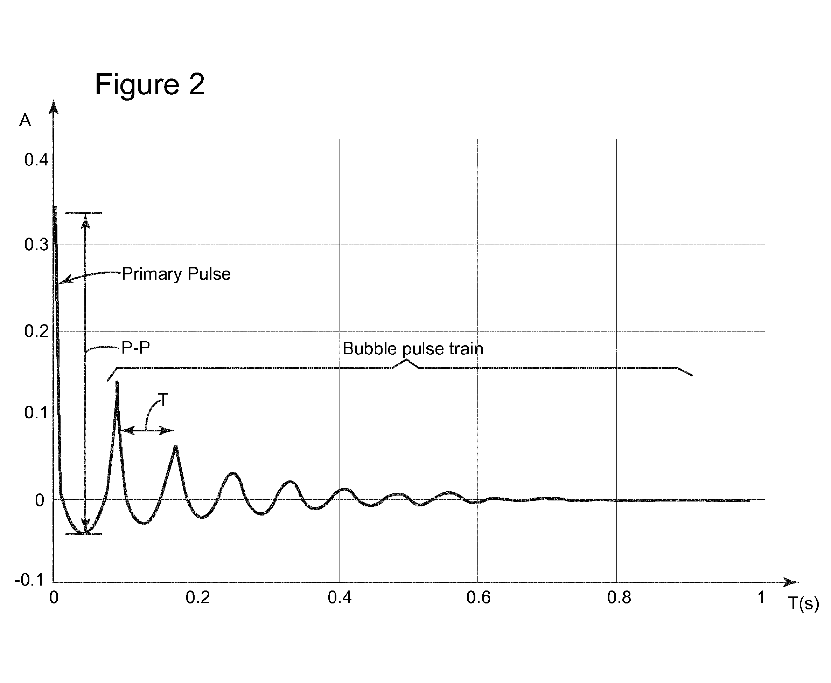

Returning to the air guns, an air gun stores compressed air and releases it suddenly underwater when fired. The released air forms a bubble (which may be considered spherical), with air pressure inside the bubble initially greatly exceeding the hydrostatic pressure in the surrounding water. The bubble expands, displacing the water and causing a pressure disturbance that travels through the water. As the bubble expands, the pressure decreases, eventually becoming lower than the hydrostatic pressure. When the pressure becomes lower than the hydrostatic pressure, the bubble begins to contract until the pressure inside again becomes greater than the hydrostatic pressure. The process of expansion and contraction may continue through many cycles, thereby generating a pressure (i.e., seismic) wave. The pressure variation generated in the water by a single source (which can be measured using a hydrophone or geophone located near the air gun) as a function of time is called the near-field signature and is illustrated in Figure 2. A first pressure increase due to the released air is called primary pulse, and it is followed by a pressure drop known as a ghost. Between highest primary pressure and lowest ghost pressure there is a peak pressure variation (P-P). The pulses following the primary and the ghost are known as a bubble pulse train. The time T between pulses is the bubble period.

Single air guns are not practical because they do not produce enough energy to penetrate at desired depths under the seafloor, and plural weak oscillations (i.e., the bubble pulse train) following the primary (first) pulse complicates seismic data processing. These problems are overcome by using arrays of air guns, generating a larger amplitude primary pulse and canceling secondary individual pulses by destructive interference.

A source array includes plural individual sources. An individual source may be an air gun or a cluster of air guns. Since the dimensions of the source array, including plural individual sources, are comparable with the generated wave's wavelength, the overall wave generated by the source array is directional, i.e., the shape of the wave, or its signature varies with the direction until, at a great enough distance, the wave starts having a stable shape. After the shape becomes stable, the amplitude of the wave decreases inversely proportional to the distance. The region where the signature shape no longer changes significantly with distance is known as the "far-field," in contrast to the "near-field" region where the shape varies. Knowledge of the source's far-field signature is desirable in order to extract information about the geological structure generating the detected wave upon receiving the far-field input wave.

In order to estimate the source array's far-field signature, there is a method in which an equivalent notional signature for each individual source may be calculated for each of the guns using near-field measurements (see e.g., U.S. Patent No. 4,476,553, the entire content of which is incorporated herewith by reference). The equivalent notional signature is a representation of amplitude due to an individual source as a function of time, the source array's far-field signature being a superposition of the notional signatures corresponding to each of the individual sources. In other words, the equivalent notional signature is a tool for representing the contribution of an individual source to the far-field signature, such that the individual source contribution is decoupled from contributions of other individual sources in the source array.

Another way to determine the far-field signature is to launch a probe (hydrophone) under the source array and to measure the pressure that propagates from the source array to the probe. Figure 1 illustrates the hydrophone 120 being towed by vessel 101 with a cable 122. A weight or depressor 124 may be attached to cable 122 for maintaining the hydrophone to a desired depth. Alternatively, hydrophone 120 may be attached to a sonobuoy (not shown) for achieving the desired depth. However, traditional probes are, among other things, difficult to handle because the probe needs to sink hundreds of meters below the water surface, and they are difficult to align, along a vertical direction, with the source array.

Thus, it would be desirable to have methods and devices capable of accurately and easily measuring the far-field signature of a seismic source.

### SUMMARY

According to an embodiment, there is a sensor probe system for measuring a signature of a seismic source array. The system includes a base-mounted part attached to a base; a sensor probe configured to sink in water toward its bottom when released from the base-mounted part, wherein the sensor probe includes a signature sensor for measuring the signature of the source array; and a cable connecting the sensor probe to the base-mounted part so that the sensor probe is retrievable. A portion of the cable is wound in the base-mounted part and a remaining part of the cable is wound on a tail of the sensor probe prior to launch.

According to another embodiment, there is a method for measuring a signature of a seismic source array. The method includes towing with a vessel the source array; launching a first sensor probe from the vessel, wherein the first sensor probe is configured to sink in water toward its bottom when released from the vessel, the first sensor probe being connected to a base-mounted part through a first cable, and the first sensor probe includes a first signature sensor for measuring the signature of the source array; and measuring with the first signature sensor the signature of the source array when the source array is fired at a first time. A portion of the first cable is wound on the base-mounted part and a remaining part of the first cable is wound on a tail of the first sensor probe prior to launch.

According to another embodiment, there is a system for measuring a signature of a seismic source array. The system includes the source array being towed in water; a base-mounted part attached to a base; a sensor probe configured to sink in water toward its bottom when released from the base, wherein the sensor probe includes a signature sensor for measuring the signature of the source array; and a cable connecting the sensor probe to the base-mounted part so that the sensor probe is retrievable. A portion of the cable is wound in the base-mounted part and a remaining part of the cable is wound on a tail of the sensor probe prior to launch.

According to another embodiment, there is a method for measuring a signature of a seismic source array. The method includes towing with a vessel the source array; launching a first sensor probe from the vessel, wherein the first sensor probe is configured to sink toward ocean bottom when released in water, the first sensor probe being connected to a main cable directly and/or through a first cable, and the first sensor probe includes a first signature sensor for measuring the signature of the source array; launching a second sensor probe, wherein the second sensor probe is configured to sink toward ocean bottom when released in water, the second sensor probe being connected to the main cable directly or via a second cable and the second sensor probe includes a second signature sensor; and measuring with one of the first and second signature sensors the signature of the source array when the source array is fired at a first time. The main cable is attached to a base-mounted part on the vessel.

### BRIEF DESCRIPTION OF THE DRAWINGS

The accompanying drawings, which are incorporated in and constitute a part of the specification, illustrate one or more embodiments and, together with the description, explain these embodiments. In the drawings:

Figure 1 illustrates a conventional seismic survey system;

Figure 2 is a graph illustrating a near-field signature of an air gun;

Figure 3 illustrates a source array;

Figure 4 illustrates a sensor probe deployed to measure a far-field signature of a source array according to an embodiment;

Figure 5A illustrates a sensor probe system according to an embodiment;

Figure 5B illustrates a display region of a sensor probe according to an embodiment;

Figure 6 illustrates a depressor attached to a cable connecting a sensor probe to a vessel according to an embodiment;

Figure 7 illustrates a trajectory of a sensor probe when launched to measure a far-field signature according to an embodiment;

Figures 8A-B illustrate a sensor probe system including two or more sensor probes according to embodiments;

Figures 9A-B illustrate methods for deploying multiple sensor probes according to embodiments;

Figure 10 is a flowchart of a method for measuring a far-field signature according to an embodiment;

Figure 11 is a schematic diagram of a curved streamer;

Figure 12 is a schematic diagram of a multi-level source; and

Figure 13 is a schematic diagram of a computing device.

### DETAILED DESCRIPTION

The following description of the embodiments refers to the accompanying drawings. The same reference numbers in different drawings identify the same or similar elements. The following detailed description does not limit the invention. Instead, the scope of the invention is defined by the appended claims. The following embodiments are discussed, for simplicity, with regard to the terminology and structure of a seismic marine source array having plural air guns. However, the embodiments to be discussed next are not limited to air guns, but may be applied to other types of seismic sources, for example, vibrators.

Reference throughout the specification to "one embodiment" or "an embodiment" means that a particular feature, structure or characteristic described in connection with an embodiment is included in at least one embodiment of the subject matter disclosed. Thus, the appearance of the phrases "in one embodiment" or "in an embodiment" in various places throughout the specification is not necessarily referring to the same embodiment. Further, the particular features, structures or characteristics may be combined in any suitable manner in one or more embodiments.

According to an embodiment, plural air guns are used to form a seismic source array. The air guns are controlled by one or more air-gun controllers. One or more sensor probes are launched from the vessel towing the source array at precalculated instants so that good vertical alignment is achieved between the sensor probe and the source array. The sensor probe may be designed to quickly sink to a required depth and be easily retrievable. Also, the method for launching the sensor probe may be designed to produce minimal drag between itself and water, to achieve good alignment between the sensor probe and the source array.

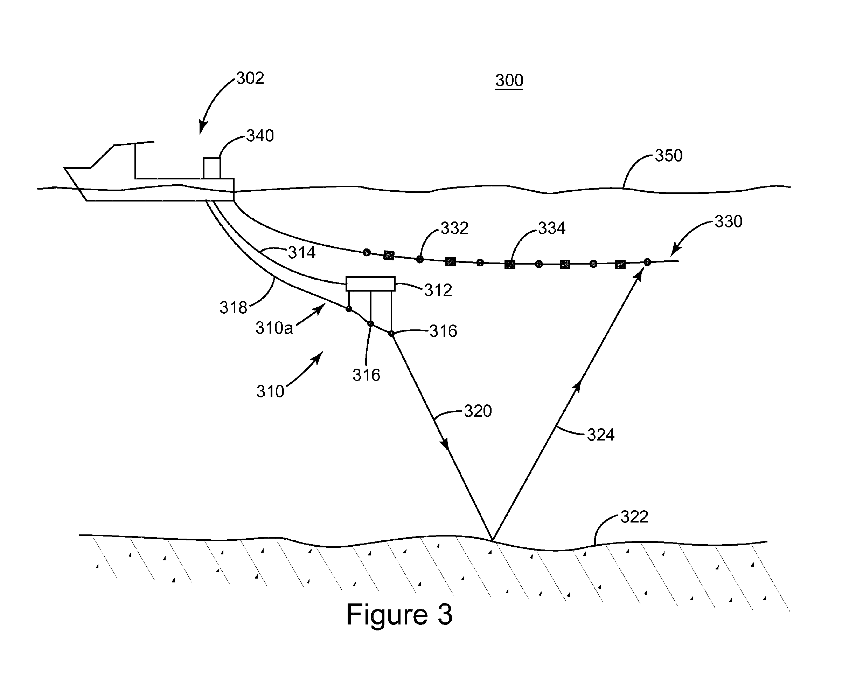

Prior to disclosing the sensor probe, a discussion about source arrays is believed to be in order. Figure 3 illustrates a surveying system 300 that includes a vessel 302 which tows a marine source array 310 and/or one or more streamers 330 (the figure shows a single streamer for simplicity). Streamer 330 includes plural receivers 332 distributed along the streamer and below the water surface 350. One or more birds (i.e., depth and/or lateral steering devices) 334 are also provided along streamer 330 for controlling a position and/or shape of the streamer.

Source array 310 includes one or more sub-arrays 310a. Sub-array 310a may include a float 312 connected through a strength member 314 to vessel 302. Float 312 may be configured to float at the water surface or under water (e.g., for artic surveys). Plural air guns 316 are attached to float 312. In one application, the air guns are distributed at various depths relative to the float. The air guns may be located along a horizontal, slanted or curved (parameterized) line. A time-break sensor (not shown) may be located inside each air gun to detect when the air gun is activated. A near-field sensor (not shown) may be located close to the air gun, above or below it, for determining a near-field signature. The near-field sensor may be a hydrophone.

The air guns are also connected to the vessel through an umbilical 318. Umbilical 318 may be configured to facilitate data and electric power exchange with a controller 340 located on the vessel. Further, the umbilical may transmit compressed air to the air guns for generating the seismic waves. Figure 3 also illustrates a seismic wave 320 being generated by air gun 316, propagating downward to the ocean bottom 322, where it gets reflected, and then propagating upward toward seismic receiver 332.

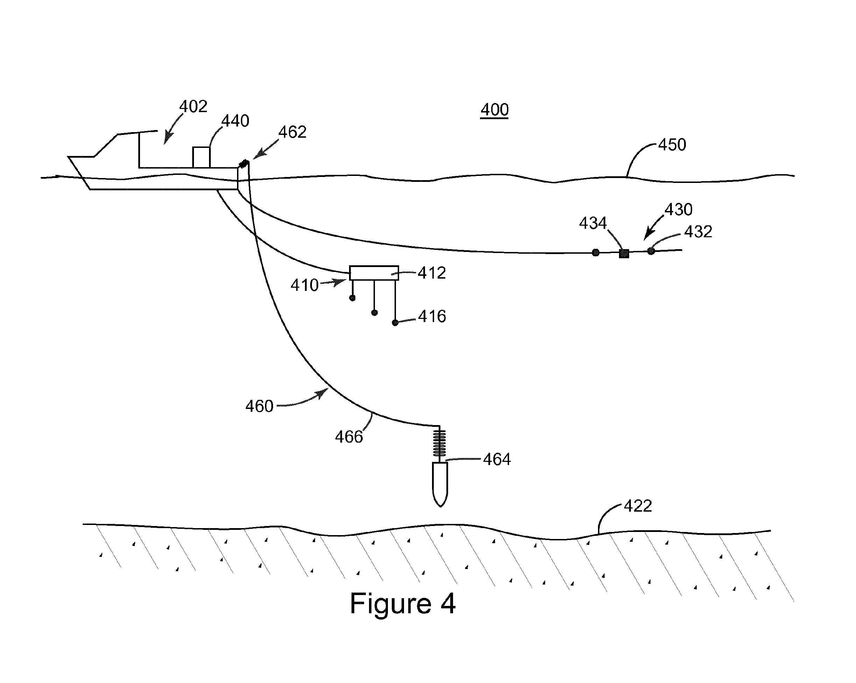

According to an embodiment illustrated in Figure 4, launchable/recoverable sensor probe system 460 is mounted on a vessel 402 that tows a source array 410. Sensor probe system 460 includes various parts, e.g., has a vessel-mounted part 462, a sensor probe 464 and a cable 466 that connects vessel-mounted part 462 to sensor probe 464. These elements of the sensor probe system 460 are now discussed in turn prior to discussing a method of using the system.

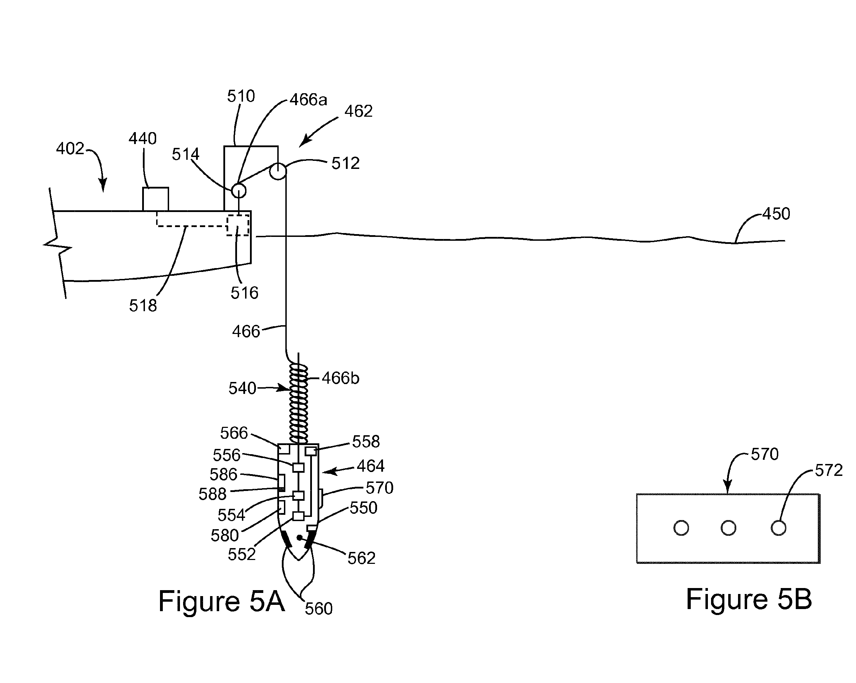

The vessel-mounted part 462 is shown in more detail in Figure 5A. It may include an arm 510 attached to the vessel 402 and configured to hold a pulley 512 or equivalent device. Part 466a (e.g., half of the cable) of cable 466 is wound on a bobbin 514 and then fed to pulley 512. The other part 466b (e.g., the other half of the cable) of cable 466 is stored on a corresponding spool 540 attached to sensor probe 464. Spool 540 forms the tail of sensor probe 464 and is detachably attached to the body 550 of sensor probe 464.

Vessel-mounted part 462 may also include a motor 516 for spinning bobbin 514, for example, during the recovery phase for retrieving sensor probe 464 back on the vessel. Motor 516 is connected through a cable 518 to controller 440 for control purposes.

Body 550 is designed to sink as fast as possible. For example, the body may have a drop-like shape. Weights may be added to the body to increase its sinking speed. In one application, it is desired to sink the sensor probe to a depth between 500 and 1200 m. Body 550 houses one or more sensors. Sensor 552 may include a signature sensor, e.g., hydrophone, a geophone, an accelerometer, a depth sensor, a combination of them, etc. Signature sensor 552 may be connected to a processor 554 that collects the recorded data, e.g., pressure, from signature sensor 552. Processor 554 may be configured to process this data prior to storing it on a memory device 556. These elements may be powered by a local battery 558 also located inside body 550. Alternatively, electric power may be provided through cable 466 from vessel 402.

Sensor probe 464 may also include one or more wings 560 that may be folded along body 550. A motor 562 may be connected to wings 560 and configured to activate the wings as will be discussed later, for example, to slow down the descent of sensor probe 464. Further, sensor probe 464 may include other types of sensors, e.g., a depth sensor 566 for measuring a depth of the probe. In addition to depth and recorded sound pressure, processor 554 may include a clock that provides a time stamp for each recording. Processor 554 may also include an interface (shown later) for exchanging all this data with controller 440 on the vessel.

In one application, sensor probe 464 may include a display region 570 that may include one or more indicators 572, as illustrated in Figure 5B. Display region 570 may be located either inside or outside on the surface of the sensor probe. One such indicator may be an LED. For example, display region 570 may include LED 572 that is connected to processor 554. Processor 554 may perform quality control (QC) calculations based on its depth and sound pressure recorded from the source array. Based on these calculations, the color of LED 572 may be green if the sensor probe has reached desired depth and it also measured the far-field signature of the source array after reaching the desired depth. The color of LED 572 may be yellow if one of the two goals has been achieved, and it may be red if neither goal has been achieved. More colors or different indicators (e.g., blinking colors) may be used to signal these goals and other operational quantities. In this way, the sensor probe's operator can easily determine, when retrieving the sensor probe, whether the far-field signature has been correctly measured or not.

Sensor probe 464 may also include a location system 580 for determining a position of the probe under water. For example, location system 580 may be an ultra-short base line (USBL), i.e., a system that includes a transceiver, which is mounted on a pole under a ship or on a buoy, and a transponder/responder on the sensor probe. Location system 580 may also be the seismic vessel acoustic network. Controller 440 or processor 554 or both may be used to calculate a position of the sensor probe from the ranges and bearings measured by the transceiver.

Sensor probe 464 may also house a communication system 586 so that quality control data and other data stored by memory device 556 may be easily transferred to the vessel when the sensor probe is brought back on the vessel. Optionally, commands from the vessel may be transmitted to processor 554 using communication system 586, e.g., a new depth. Communication system 586 may include one or more of a Bluetooth system, an infrared communication system, a Wi-Fi system, or other known short-range wireless communications systems. In addition, communication system 586 may have one or more ports 588, e.g., a USB port for connecting through a wire to controller 440 on the vessel. Port 588 is waterproof.

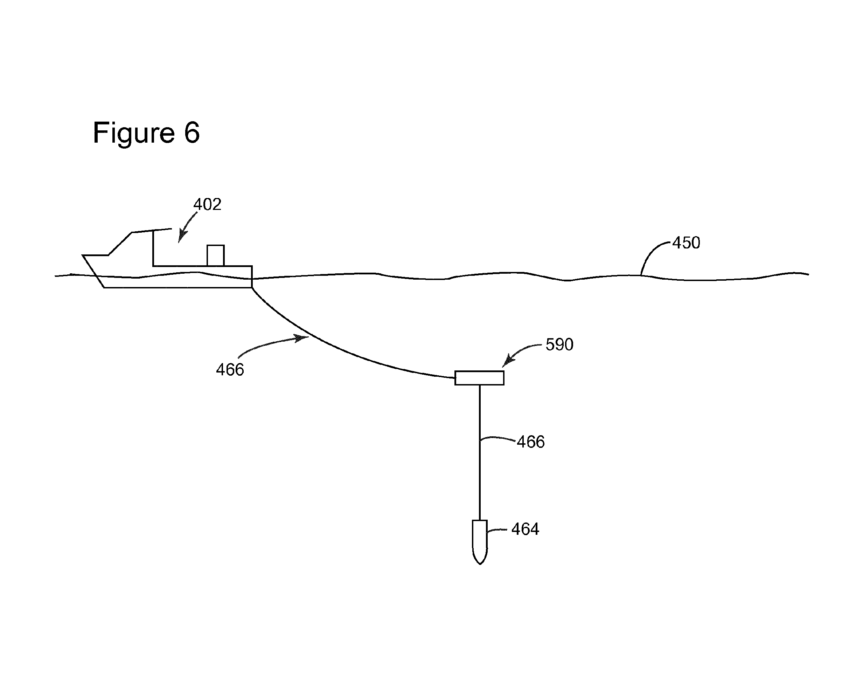

If sensor probe 464 is intended to be towed for an extended time underwater and/or under the seismic source, it may include a depressor 590 to help the sensor probe maintain a desired depth. Depressor 590 may be attached to cable 466 as illustrated in Figure 6. With this depressor in place, it is possible to maintain a vertical position of the sensor probe's cable while the vessel advances along its travel path and the sensor probe is retrieved. In this way, tangling of the sensor probe and the seismic source may be prevented.. In one application, the sensor probe has depressor-type wings for maintaining the sensor probe at a given depth when the cable is fully extended and/or the depressor is on board.

In one application, cable 466 includes one or more electrical wires for exchanging data and/or power between sensor probe and vessel. Cable 466 may also include a strength member, e.g., made of metal, synthetic material, polymer, etc. In this disclosure, the term "cable" is used to also include the terms "rope" or "wire," etc.

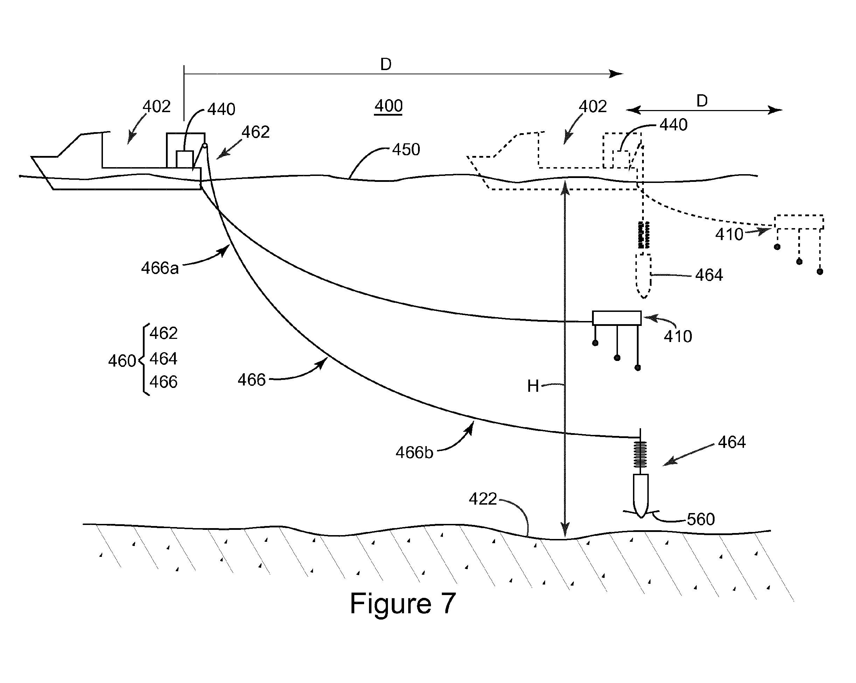

Next, a process of using the sensor probe is discussed. As illustrated in Figure 7, sensor probe 464 is launched in water from the back of vessel 402, in front of source array 410. The launching phase is illustrated using dashed lines. Sensor probe 464 sinks toward the ocean bottom 422 due to gravity. As vessel 402 advances with a constant speed, sensor probe 464 continues to sink until it arrives at a predetermined depth H. At this time, wings 560 may be deployed to slow down the vertical movement of the sensor.

While sensor probe 464 sinks toward the ocean bottom, both portions 466a and 466b of cable 466 unwind from their respective spools, thus, allowing the sensor probe to fall almost vertically toward the ocean bottom. In other words, by having both ends of cable 466 simultaneously unwinding, it is possible to provide enough cable length to account for the movement of the vessel so that the vessel does not drag the sensor probe, i.e., the sensor probe free-falls toward the ocean bottom and the cable is substantially stationary along the vessel's moving direction. However, the cable sinks along the gravity, toward the ocean bottom. By taking into account the vessel's speed, the sinking speed of the sensor probe, the fixed distance D between the vessel and the source array (note that Figure 7 is not at scale), and the desired depth H, controller 440 can calculate the exact time when to launch the sensor probe so that the sensor probe arrives at its desired depth H when the source array is vertically above it, as illustrated with solid lines in Figure 7.

This process may be repeated a couple of times as the sensor probe can be retrieved back on the vessel. For example, after measuring the far-field signature or just a signature of the given source array (if the sensor probe is not far away from the seismic source), the vessel-mounted part 462 of the launchable/recoverable sensor probe system 460 activates bobbin 514 to retrieve the entire sensor probe. Once on the vessel, display region 570 is verified to confirm that the far-field signature has been recorded, and then spool 540 is detached from the sensor probe and a new one, having a portion 466b wound on it, is attached to the sensor probe and launched again for a new measurement. At the same time, the data stored on memory device 556 may be transferred to controller 440 using the communication mechanism 586. Alternatively, the data may be left on the sensor probe until more data is collected.

If display region 570 indicates that no data has been collected, it may indicate a malfunction of the sensor probe. A new sensor probe may be used if this is the case, or the measurement may be repeated once more.

Once the data is collected and analyzed by controller 440, the measured far-field signature may be compared to a modeled source signature as well as prior measurements. If the new measurements and the modeled source signature differ from each other by a given threshold, a maintenance procedure may be started for the source array.

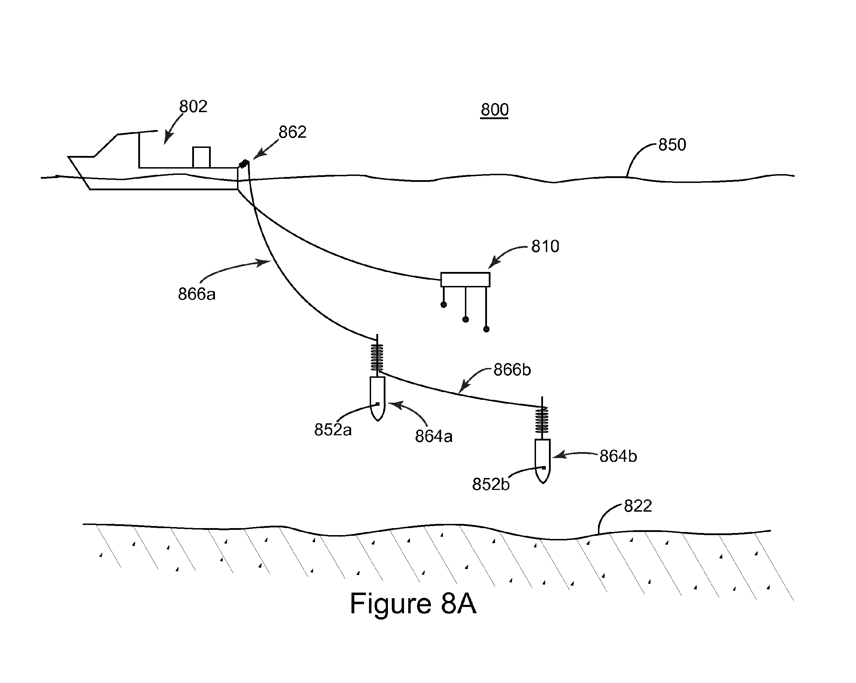

In an alternative embodiment, more than one sensor probe may be used during a given measurement. For example, Figure 8A shows a system 800 that includes two sensor probes 864a and 864b which are similar to that discussed in the previous figures. Each sensor probe includes a corresponding signature sensor 852a and 852b, respectively. The first sensor probe 864a is connected to vessel 802 through cable 866a, and the second sensor probe 864b is connected to first sensor probe 864a through a similar cable 866b. In one application, the timing for launching the sensor probes may be calculated so that one probe is behind the source array and the other probe is in front of the source array along a horizontal direction. In another application, one probe is vertically below the source array and the other probe is in front or behind of the source array to obtain information regarding the directivity of the seismic source. In still another application, more than two sensor probes may be used at the same time. In one application, the horizontal distance between the two probes is calculated to be around 50 m when fully deployed.

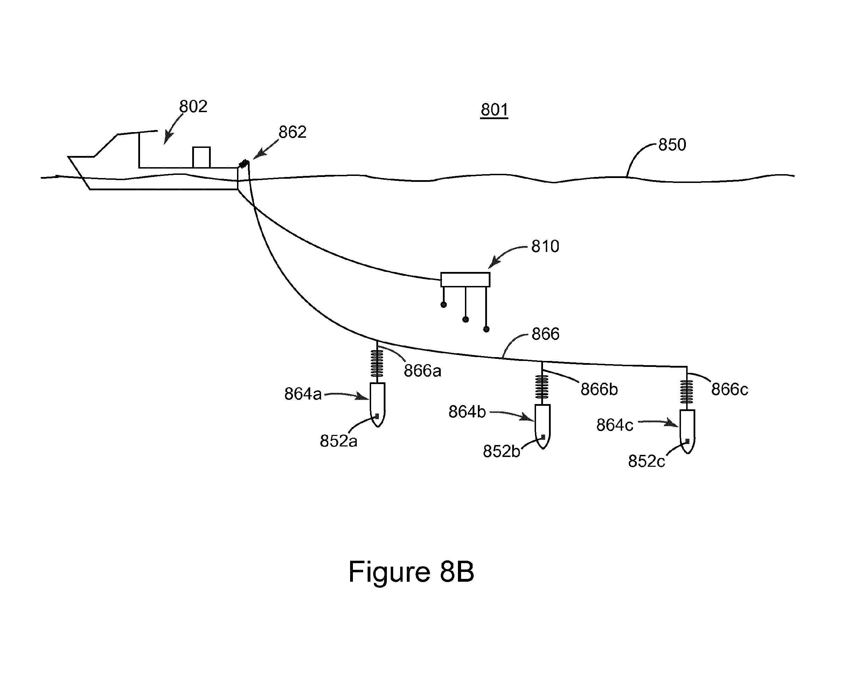

In another embodiment illustrated in Figure 8B, three sensor probes 864a-c (each including a corresponding signature sensor 852a-c) are connected to each other and to the vessel and deployed in the water. As indicated in this figure, each sensor probe may have a tail on which a corresponding cable 866a to 866c is wounded and each of these cables connects to a main cable 866 that is attached with one end to the vessel. In this way, the sensor probes do not directly connect to each other as in the embodiment of Figure 8A. Other connections between the sensor probes and the vessel may be realized with the scope of the invention. For example, main cable 866 and first cable 866c may form a single, integral cable and second and third cables 866b and 866c are attached to the main cable. In another application, main cable 866 and second cable or third cable are formed integrally and the other two cables are connected to the main cable.

When the tail of the sensor probe pays out the cable, the noise produced by this process may be high enough to affect the recorded signature. Thus, in one application, the cable length of each sensor probe is calculated in such a way that the tail does not pay out cable when the source array is shot. In another application, the tail is mounted away from the signature sensor so that the noise produced by it is attenuated.

The above discussed embodiments have been discussed with the goal of measuring a signature of a source array. While this is one possible implementation of the sensor probes, it is also possible to use the sensor probes for other reasons, e.g., to check the frequency content of the sound emitted by the source array for mammal issues, a signal emitted by a mammal, sound in a given frequency range, temperature, sound velocity, depth or any other oceanographic characteristic. Adequate processing capabilities may be implemented in the controller of the vessel so that, for example, a position or type of mammal may be identified.

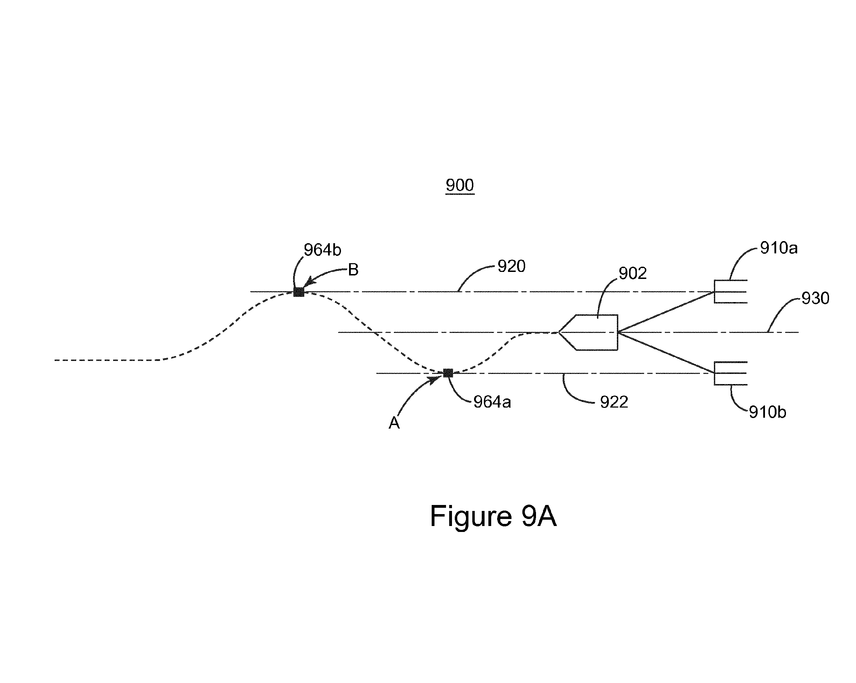

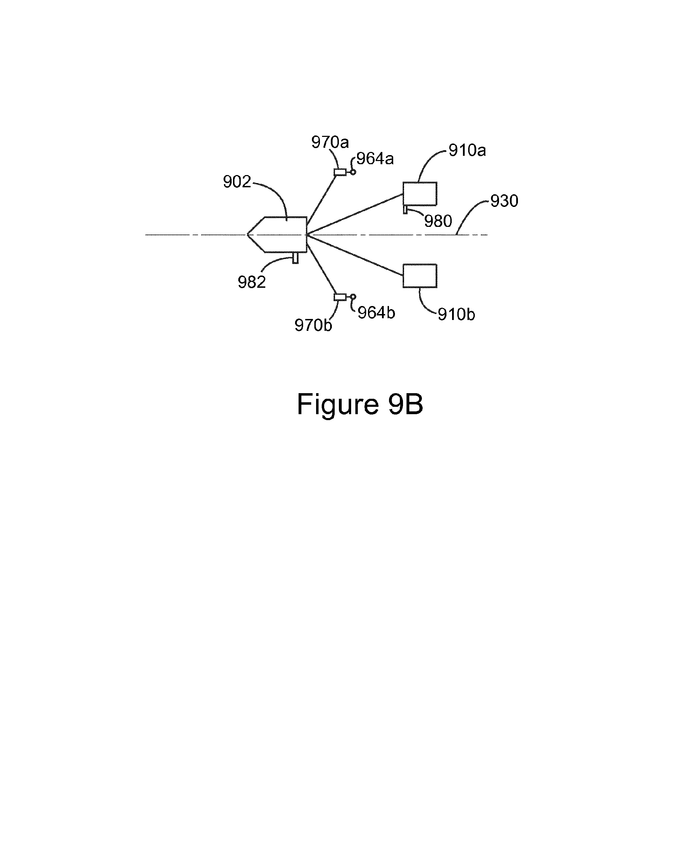

Further, the teachings of the above embodiments are not limited to a vessel from which the sensor probes are towed. Instead of a vessel, a base or platform may be used to launch the sensor probes. One such base is a buoy as illustrated in Figure 9B or a depressor as illustrated in Figure 6. Other platforms may include an autonomous underwater vehicle, a glider, a submarine, etc. The sensor probe may be design to be symmetrical along a longitudinal axis and to have a high enough weight so that the sensor probe falls substantially a vertical line. However, in another application, the sensor probe may be designed to have a weight distribution and/or shape so that it falls on one side of the vertical.

According to an embodiment illustrated in Figure 9A, a seismic system 900 includes a vessel 902 that tows two source arrays 910a and 910b. Vessel 900 may follow a straight-line path 930 while source arrays 910a and 910b follow parallel paths 920 and 922, respectively. For positioning the sensor probes vertically below each of the source arrays, it is possible to modify the vessel's path so that a first sensor probe 964a is launched in water at position A and a second sensor probe 964b is launched at position B, where position A lies along path 922 and position B lies along path 920. Then, vessel 902 return to its straight-line path 930 while the sensor probes sink to the desired depths, just below the first and second source arrays. The two sensor probes may be independently connected to the vessel or connected to each other as illustrated in Figure 8A.

According to another embodiment illustrated in Figure 9B, a buoy or another floating structure (e.g., a depressor, etc.) 970a or 970b may be towed behind the vessel and the sense probe 964a or 964b may be attached to the buoy. In this way, the buoy may be towed at a desired lateral position from the path 903, e.g., by having the buoy provided with a small deflector, arm, paravane or wing. In one application, the buoy may be controlled from the vessel to achieve a desired lateral offset from path 930. The buoy may have various equipment, for example, a controller, a battery, a motor, a global positioning system, etc. In this way, the sense probe may be launched/towed just in front (along the path 930) of a seismic source array without the need for the vessel to change its path as discussed above with regard to Figure 9A. The above noted applications may be equally applied to a single buoy. If a buoy is used, then the vessel-mounted part 462 discussed above with regard to Figure 7 is attached to the buoy instead of the vessel. For this reason, part 462 may also be called a base-mounted part and it should be considered the equivalent of the vessel-mounted part. The system illustrated in Figure 9B may also include an acoustic beacon 980, mounted on the source array or on the sensor probe and used to enhance a positioning of the sensor probe. In one application, a signal from the acoustic beacon is used by a controller on the vessel to shoot the source array when the source array and the sensor probe share the same vertical position. In another application, an acoustic system 982, e.g., an ultra-short base line, may be used to determine the position of the sensor probe. The acoustic system 982 may be distributed on the vessel and/or buoy and the sensor probe, i.e., a transponder on the vessel. The vessel and/or the buoy may also include equipment traditionally used during seismic surveys, for example, a global positioning system.

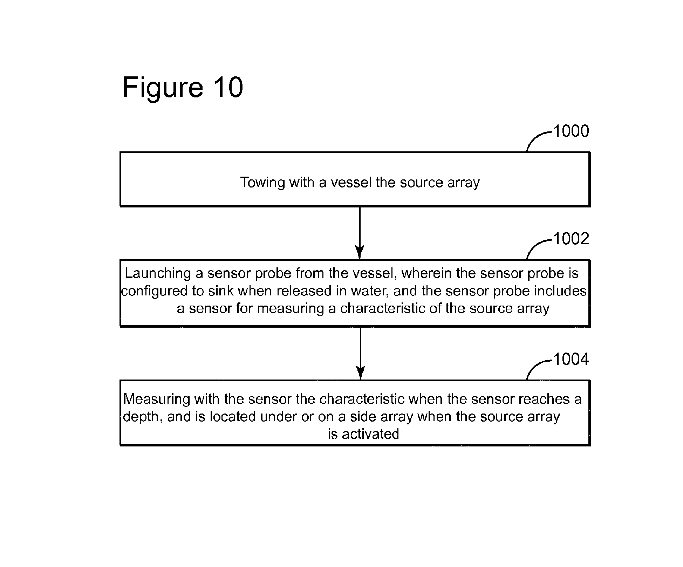

According to an embodiment, there is a method for measuring a far-field signature of a marine seismic source array described in Figure 10. The method includes a step 1000 of towing with a vessel the source array, a step 1002 of launching a sensor probe from the vessel or from another platform (base), wherein the sensor probe is configured to sink when released in water, with the sensor probe connected to a base-mounted part through a cable, and including a sensor for measuring a characteristic of the source array or of the water, and a step 1004 of measuring with the sensor the characteristic. A portion of the cable may be wound on the base-mounted part, and a remaining part of the cable may be wound on a tail of the sensor probe prior to launch.

If two or more sensor probes are used, the method may further include a step of launching a second sensor probe (864b) from the vessel, wherein the second sensor probe (864b) is configured to sink in water toward its bottom when released from the vessel, the second sensor probe (864b) being connected to the first sensor probe (864a) through a second cable (866b), and the second sensor probe (864b) including a second signature sensor (852). The method may also include a step of measuring with the second signature sensor (852b) the signature of the source array (810) when the source array is fired at a second time, after advancing a given distance from where the source array was fired at the first time. As previously described, an end of the second cable (866b) is connected to the first sensor probe (864a) and the second cable (866b) is wound on a tail of the second sensor probe (864b) prior to launch. In one application, a total length of the second cable is configured to be smaller than an inline distance between two consecutive shootings of a source array. Those skilled in the art would appreciate that two or more sensor probes may be used without departing from the invention. Also, variations in the distribution of the cables and the configuration of the sensor probes are envision to fall within the scope of the invention.

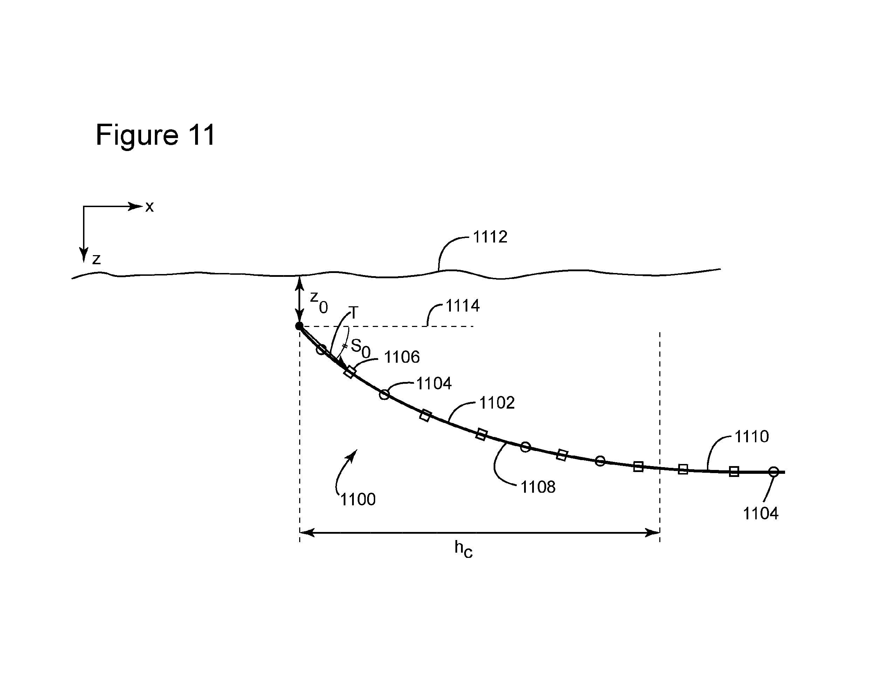

The above-discussed sensor probe and associated methods may be used during a seismic survey, i.e., while the streamers shown in Figure 4 are active and towed by the vessel. The above embodiments were discussed without specifying what type of seismic receivers is used to record the seismic data. In this sense, it is known in the art to use, for a marine seismic survey, streamers that are towed one or more vessels, and the streamers include the seismic receivers. The streamers may be horizontal, slanted or have a curved profile as illustrated in Figure 11.

The curved streamer 1100 of Figure 11 includes a body 1102 having a predetermined length, plural detectors 1104 provided along the body, and plural birds 1106 provided along the body for maintaining the selected curved profile. The streamer is configured to flow underwater when towed so the plural detectors are distributed along the curved profile. The curved profile may be described as a parameterized curve, e.g., a curve described by (i) a depth z₀ of a first detector (measured from the water surface 1112), (ii) a slope s₀ of a first portion T of the body with an axis 1114 parallel with the water surface 1112, and (iii) a predetermined horizontal distance h_{c} between the first detector and an end of the curved profile. Note that not the entire streamer has to have the curved profile. In other words, the curved profile should not be construed to always apply to the entire length of the streamer. While this situation is possible, the curved profile may be applied only to a portion 1108 of the streamer. In other words, the streamer may have (i) only a portion 1108 having the curved profile or (ii) a portion 1108 having the curved profile and a portion 1110 having a flat profile, the two portions being attached to each other.

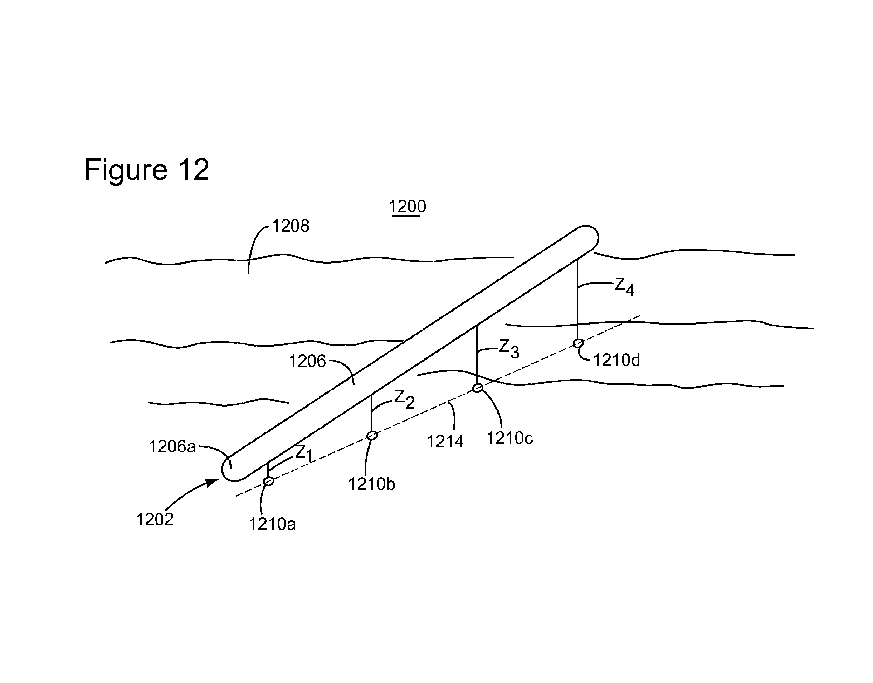

Further, the above embodiments may be used with a multi-level source. A multi-level source 1200 has one or more sub-arrays. A first sub-array 1202 has a float 1206 configured to float at the water surface 1208 or underwater at a predetermined depth. Plural source points 1210a-d are suspended from the float 1206 in a known manner. A first source point 1210a may be suspended closest to the head 1206a of the float 1206, at a first depth z1. A second source point 1210b may be suspended next, at a second depth z2, different from z1. A third source point 1210c may be suspended next, at a third depth z3, different from z1 and z2, and so on. Figure 12 shows, for simplicity, only four source points 1210a-d, but an actual implementation may have any desired number of source points. In one application, because the source points are distributed at different depths, they are not simultaneously activated. In other words, the source array is synchronized, i.e., a deeper source point is activated later in time (e.g., 2 ms for 3 m depth difference when the speed of sound in water is 1500 m/s) such that corresponding sound signals produced by the plural source points coalesce and, thus, the overall sound signal produced by the source array appears to be a single sound signal.

The depths z1 to z4 of the source points of the first sub-array 1202 may obey various relationships. In one application, the depths of the source points increase from the head toward the tail of the float, i.e., z1<z2<z3<z4. In another application, the depths of the source points decrease from the head to the tail of the float. In another application, the source points are slanted, i.e., provided on an imaginary line 1214. In still another application, line 1214 is a straight line. In yet another application, line 1214 is a curved line, e.g., part of a parabola, circle, hyperbola, etc. In one application, the depth of the first source point for the sub-array 1202 is about 5 m and the greatest depth of the last source point is about 8 m. In a variation of this embodiment, the depth range is between 8.5 and 10.5 m or between 11 and 14 m. In another variation of this embodiment, when line 1214 is straight, the depths of the source points increase by 0.5 m from a source point to an adjacent source point. Those skilled in the art would recognize that these ranges are exemplary and these numbers may vary from survey to survey. A common feature of all these embodiments is that the source points have variable depths so that a single sub-array exhibits multiple-level source points.

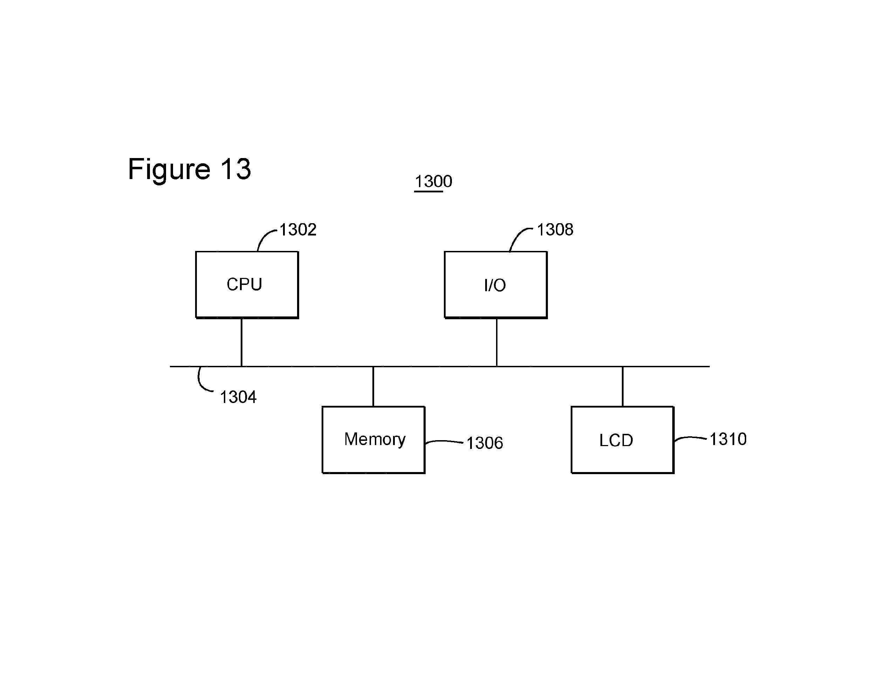

An exemplary computing device corresponding to controller 440 or processor 554 is illustrated in Figure 13. Computing device 1300 includes a processor 1302 connected through a bus 1304 to a storage device 1306. Computing device 1300 may also include an input/output interface 1308 through which data can be exchanged with the processor and/or storage device. For example, a keyboard, mouse or other device may be connected to the input/output interface 1308 to send commands to the processor and/or to collect data stored in the storage device or to provide data necessary to the processor. The processor may be used to process, for example, seismic data collected during the seismic survey. Results of this or another algorithm may be visualized on a screen 1310. This computing device may be used to determine a time when to launch the sensor probe, it may interact with a navigation system of the vessel and may receive information related to the seismic survey, e.g., positions of various nodes, water currents, etc. The computing device may control the seismic source and/or the streamers.

The disclosed exemplary embodiments provide a method and system that use a portable sensor probe for determining a far-field signature of a source array. It should be understood that this description is not intended to limit the invention. On the contrary, the exemplary embodiments are intended to cover alternatives, modifications and equivalents, which are included in the spirit and scope of the invention as defined by the appended claims. Further, in the detailed description of the exemplary embodiments, numerous specific details are set forth in order to provide a comprehensive understanding of the claimed invention. However, one skilled in the art would understand that various embodiments may be practiced without such specific details.

As also will be appreciated by one skilled in the art, the exemplary embodiments may combine hardware and software aspects. The exemplary embodiments may take the form of a computer-readable storage medium non-transitorily storing executable codes (i.e., a computer program) which when executed on a computer perform the above-described methods. Any suitable computer-readable medium may be utilized, including hard disks, CD-ROMs, digital versatile disc (DVD), optical storage devices or magnetic storage devices such a floppy disk or magnetic tape. Other nonlimiting examples of computer-readable media include flash-type memories or other known memories.

Although the features and elements of the present exemplary embodiments are described in the embodiments in particular combinations, each feature or element can be used alone without the other features and elements of the embodiments or in various combinations with or without other features and elements disclosed herein.

This written description uses examples of the subject matter disclosed to enable any person skilled in the art to practice the same, including making and using any devices or systems and performing any incorporated methods. The patentable scope of the subject matter is defined by the claims, and may include other examples that occur to those skilled in the art. Such other examples are intended to be within the scope of the claims.

## Claims

1. A sensor probe system (460) for measuring a signature of a seismic source array (410), the system (460) comprising:
a base-mounted part (462) attached to a base (402, 970a);
a sensor probe (464) configured to sink in water toward its bottom when released from the base-mounted part (462), wherein the sensor probe (464) includes a signature sensor (552) for measuring the signature of the source array (410); and
a cable (466) connecting the sensor probe (464) to the base-mounted part (462) so that the sensor probe (464) is retrievable,
wherein a portion (466a) of the cable (466) is wound in the base-mounted part (462) and a remaining part (466b) of the cable (466) is wound on a tail (540) of the sensor probe (464) prior to launch.

2. The system of Claim 1, wherein the sensor probe (464) comprises:
a body (550) housing the signature sensor, a processor (554) and a memory device (556) connected to each other.

3. The system of Claim 2, wherein the sensor probe further comprises:
a depth sensor (566) for measuring a depth of the sensor probe; and
a communication system (586) for exchanging data with the base.

4. The system of Claim 3, further comprising:
one or more wings (560) stored flush with the body; and
a motor (562) configured to actuate the one or more wings (560) to slow down a descent of the sensor body.

5. The system of Claim 3, further comprising:
a display region (570) attached to the body and configured to indicate a status of the sensor probe,
wherein the display region includes at least one LED (572) that exhibits a first color if the sensor probe has fulfilled two conditions, a second color if one of the two conditions has not been achieved, and a third color or a blinking first or second color if none of the two conditions is fulfilled, and
wherein the first condition is related to reaching a desired depth and the second condition is related to recording the signature of the source array after reaching the desired depth.

6. The system of Claim 1, further comprising:
a deflector (590) attached to the cable, between the base and the body and configured to be deployed to maintain a sensor probe's cable away from the seismic source array.

7. The system of Claim 1, further comprising:
a controller (440) located on the base (402 or 970a) and configured to calculate a launching instant of the sensor probe so that the sensor probe arrives at a depth, vertically below the source array, when the source array is activated.

8. The system of Claim 1, further comprising at least one of:
an acoustic beacon for positioning the sensor probe, and
an acoustic system for determining a position of the sensor probe.

9. A method for measuring a signature of a seismic source array (410), the method comprising:
towing with a vessel (402) the source array (410);
launching a first sensor probe (464, 864a) from the vessel, wherein the first sensor probe (464, 864a) is configured to sink in water toward its bottom when released from the vessel, the first sensor probe (464, 864a) being connected to a base-mounted part (462) through a first cable (466), and the first sensor probe (464, 864a) includes a first signature sensor (552) for measuring the signature of the source array (410); and
measuring with the first signature sensor (552) the signature of the source array (410) when the the source array (410) is fired at a first time,
wherein a portion (466a) of the first cable (466) is wound on the base-mounted part (462) and a remaining part (466b) of the first cable (466) is wound on a tail (540) of the first sensor probe (464) prior to launch.

10. The method of Claim 9, further comprising:
displaying on a display region (570) attached to the body a status of the first sensor probe.

11. The method of Claim 9, further comprising:
activating the source array when the first sensor probe is vertically below the first source array or on a side of the source array.

12. The method of Claim 9, further comprising:
launching the first sensor probe at a predetermined time so that the first sensor probe is positioned below the source array when the source array is activated.

13. The method of Claim 9, further comprising:
launching a second sensor probe (864b) from the vessel, wherein the second sensor probe (864b) is configured to sink in water toward its bottom when released from the vessel, the second sensor probe (864b) being connected to the first sensor probe (864a) through a second cable (866b), and the second sensor probe (864b) including a second signature sensor (852); and
measuring with the second signature sensor (852b) the signature of the source array (810) when the source array is fired at a second time, after advancing a given distance from where the source array was fired at the first time.

14. A system (400) for measuring a signature of a seismic source array (410), the system (400) comprising:
the source array (410) being towed in water;
a base-mounted part (462) attached to a base (402, 970a);
a sensor probe (464) configured to sink in water toward its bottom when released from the base, wherein the sensor probe (464) includes a signature sensor (552) for measuring the signature of the source array (410); and
a cable (466) connecting the sensor probe (464) to the base-mounted part (462) so that the sensor probe (464) is retrievable,
wherein a portion (466a) of the cable (466) is wound in the base-mounted part (462) and a remaining part (466b) of the cable (466) is wound on a tail (540) of the sensor probe (464) prior to launch.

15. A method for measuring a signature of a seismic source array (410), the method comprising:
towing with a vessel (402) the source array (410);
launching a first sensor probe (464, 864c) from the vessel, wherein the first sensor probe (464, 864c) is configured to sink toward ocean bottom when released in water, the first sensor probe (464, 864c) being connected to a main cable (466, 866) directly and/or through a first cable (866c), and the first sensor probe (464, 864c) includes a first signature sensor (852c) for measuring the signature of the source array (410);
launching a second sensor probe (864b), wherein the second sensor probe (864b) is configured to sink toward ocean bottom when released in water, the second sensor probe (864b) being connected to the main cable (866) directly or via a second cable (866b) and the second sensor probe (864b) includes a second signature sensor (852b); and
measuring with one of the first and second signature sensors (852c, 852b) the signature of the source array (410) when the source array (410) is fired at a first time,
wherein the main cable (866) is attached to a base-mounted part (462) on the vessel (402).
